(19) Europäisches Patentamt
European Patent Office
Office européen des brevets

(11) EP 4 765 617 A1

(12) EUROPEAN PATENT APPLICATION

(43) Date of publication:
24.06.2026 Bulletin 2026/26

(21) Application number: 24221782.6

(22) Date of filing: 19.12.2024

(51) International Patent Classification (IPC):
H02M 7/483 (2007.01)    H02M 7/49 (2007.01)

(52) Cooperative Patent Classification (CPC):
H02M 7/4835; H02M 7/49

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Maschinenfabrik Reinhausen GmbH
93059 Regensburg (DE)

(72) Inventors:
• Munoz Aguilar, Raul Santiago
93055 Regensburg (DE)
• Qoria, Taoufik
93164 Laaber (DE)
• Snook, Mark
CB24 9AD Cambridge (GB)

(54) **A METHOD FOR CONTROLLING A CONVERTER SUBGROUP, CONVERTER SUBGROUP FOR A MODULAR MULTILEVEL CONVERTER AND MODULAR MULTILEVEL CONVERTER (MMC)**

(57) The present invention relates to a method for controlling a converter subgroup (3), wherein the converter subgroup (3) comprises a plurality of converter cells (7), each converter cell (7) being controlled by a first controller (21), at least two converter arrangements (5), each converter arrangement (5) being controlled by a second controller (23), wherein each converter arrangement (5) includes at least two of the plurality of converter cells (7), a third controller (25) controlling the at least two converter arrangements (5) by being in communication with each second controller (23), the method comprising the steps of determining a DC voltage of each one of the plurality of converter cells (7) to provide respective cell DC voltages, processing the respective cell DC voltages of each one of the at least two converter arrangements (5) to provide a DC measure, and using the processed DC measure at each one of the at least two second controllers (23) to control the at least two converter arrangements (5). The present invention further relates to a converter subgroup (3) for a Modular Multilevel Converter (MMC) (1) configured for carrying out a method according to the present invention and a MMC (1).

Fig. 1

EP 4 765 617 A1

**Description**

The invention relates to a method for controlling a converter subgroup, a converter subgroup for a Modular Multilevel Converter (MMC) and a Modular Multilevel Converter (MMC).

Modular Multilevel Converters (MMCs) have emerged as a highly regarded technology for high and medium-voltage applications due to their modularity, redundancy, and low Total Harmonic Distortion (THD). Various MMC topologies have been developed, including Single-Star Bridge-Cells (SSBC), Single-Delta Bridge-Cells (SDBC), and Double-Star Chopper-Cells (DSCC) or Double-Star Bridge-Cells (DSBS), each with their unique configurations, advantages, and disadvantages.

MMCs are being operated with a modulation technique, like Phase-Shifted Pulse Width Modulation (PS-PWM), associated with an individual balancing algorithm (IBA) that is designed to balance the voltage over a specific number of cells of the MMC. If the number of cells needs to increase, to support a higher voltage for example, then the MMC controller needs to be redesigned as there is a physical limit to the number of cells that can be supported.

Therefore, it is an object of the invention to provide a method for controlling a Modular Multilevel Converter (MMC) that enables a modular approach in manufacturing so that an MMC with a configurable number of cells can be manufactured in a modular way without the need to change the method for controlling the MMC.

According to a first aspect of the present invention, the object is solved by a method comprising the features of claim 1. Therefore, a method for controlling a Modular Multilevel Converter (MMC) is provided, wherein the MMC comprises a plurality of converter cells, each converter cell being controlled by a first controller, at least two converter arrangements, each converter arrangement being controlled by a second controller, wherein each converter arrangement includes at least two of the plurality of converter cells, and a third controller controlling the at least two converter arrangements by being in communication with each second controller. The method comprises at least the following steps a) to c):

     a) determining a DC voltage of each one of the plurality of converter cells to provide respective cell DC voltages;

     b) processing the respective cell DC voltages of each one of the at least two converter arrangements to provide a DC measure;

     c) using the processed DC measure at each one of the at least two second controllers to control the at least two converter arrangements.

In principle, steps a) to c) should be performed in a sequential order. However, the invention is not limited to perform steps a) to c) in a sequential order. It is also possible to execute at least some of these steps multiple times and in parallel or partially overlapping in time.

A converter subgroup can be a group of converters including at least two converters. A converter subgroup can further be a subgroup of a plurality of converters that are connected to form an MMC.

Each one of the converter cells contains a local energy storage component, preferably a capacitor, which maintains a DC voltage of the cell, namely a cell DC voltage. The cell DC voltage can be a critical parameter for the correct operation of the MMC. The total DC voltage of the MMC is divided among the cells. The rated power and voltage levels of the application influences the necessary voltage of each cell. This means that the more cells in series the MMC has, the lower the voltage each cell needs to maintain.

As mentioned previously, each converter cell is being controlled by a first controller. The first controllers manage the operation of each cell within the converter subgroup or MMC. The first controllers can control its electrical components, like switching units, to achieve a regulated voltage of each individual converter cell. Another advantage is that the first controllers support the modularity of the MMC by controlling its internal components and being in communication with the second controller, which regulates the voltage across all cells. Additional cells can be added or removed as needed, and the system can be easily reconfigured to meet changing demands.

The MMC comprises at least two converter arrangements, each converter arrangement being controlled by a second controller, wherein each converter arrangement includes at least two of the plurality of converter cells. A converter arrangement is therefore responsible for managing a group of cells. A cell can also be referred to as a submodule. A converter arrangement can also be described as a part of a chain-link. Typically, a chain-link in the MMC structure refers to the entire series of cells or sub-modules within a leg that collectively convert and regulate the voltage and current. The second controller synchronizes the operation of the cells within its converter arrangement. It ensures that the cells switch on and off in a coordinated manner, according to the control strategy implemented for the entire MMC. One of the primary functions of the second controller is to maintain the voltage balance across the cells it governs. It does this by managing the individual cell charging and discharging, thus ensuring that the voltage of each cell remains within the desired range and contributes correctly to the overall voltage waveform. The second controller collects and processes data from its cells, such as voltage, current and temperature. This data can be used for real-time monitoring, diagnostics, and predictive maintenance. The second controller acts as an intermediary between the cells and the third controller of the MMC. They communicate the status and needs of the converter arrangements to the third controller, which then makes decisions based on the aggregated information from all converter arrangements. Therefore, the second controller can also be referred to as a chain-link controller, wherein the chain-link can include a plurality of chain-link controllers, depending on the number of converter arrangements.

The third controller of the MMC is designed to manage and control the second controllers and therefore the entire MMC. The third controller coordinates the actions of all the second controllers within the MMC, ensuring that they work together to produce the desired output voltage and current waveforms according to the system's requirements. It implements the overall control strategy for the MMC, which includes modulation techniques like Phase-Shifted Pulse Width Modulation (PS-PWM) or Level-Shifted PWM, as well as algorithms for power flow control, voltage balancing, and dynamic responses to load changes. The third controller also plays a significant role in minimizing the Total Harmonic Distortion (THD) by controlling the switching actions of the cells or other power electronic devices in the converter. The third controller can also serve as a communication hub for the MMC, interfacing with external control systems, such as a power management system or a grid operator's control center, and internal components, like the second controllers, ensuring that commands and data can be relayed accurately and promptly.

Each cell's voltage will be balanced to ensure that the output AC voltage waveform is correct. Therefore, the determination of the DC voltage of each one of the plurality of converter cells is essential to prevent overvoltage stress on the cells and maintain the health of the system. Voltage imbalances can lead to premature aging of components and potential system failures.

The determination of the DC voltage of each one of the plurality of converter cells of step a) can include an estimation or calculation of the voltage values based on previously determined voltage values or other characteristic values like resistance, power level or discharge time. This offers the advantage of increased flexibility and therefore reliance in determining the voltage values.

Preferably, the DC voltage of each one of the plurality of cells will be determined by the first controllers. The determination can also include to provide the DC voltage of each cell to the second controller. This adds to the benefit that the first controllers can send their DC voltage to the second controller to provide localized control, which allows for more precise voltage regulation at the cell level by the second controller. This helps in addressing cell-specific issues that might not be apparent at a higher system level. Additionally, this also makes the MMC, in particular the design and setup of a converter arrangement, more modular, leading into a modular approach with increased scalability.

Further preferably, the DC voltage of each one of the plurality of cells will be determined by the second controllers. This leads to a closed converter arrangement system with reduced complexity, which leads to a more straightforward system design and potentially lower costs in terms of both hardware and software. In addition, having the second controllers handle the cell DC voltage determination makes it easier to add more cells or converter arrangements without overburdening a higher-level or lower-level controller. This also adds to the benefit of a modular system architecture design of the MMC.

As previously mentioned, the method comprises a processing of the respective cell DC voltages of each one of the at least two converter arrangements to provide a DC measure in step b). The processing can include one or more intermediate steps to provide the DC measure, like comparing the respective cell DC voltages to each other or to a previous determination of the DC voltages. The processing can also include processing the cell DC voltages of each cell of a converter arrangement. Preferably, the processing will be executed by the second controllers. The second controllers receive the cell DC voltages from the first controllers or by determining the DC cell voltages directly for each cell and process the DC cell voltages to provide a DC measure that used all cell DC voltages. This aspect facilitates the modularity of the MMC as a converter arrangement can be used as a closed system being able to control its cells and first controllers using the second controller.

Furthermore, step b) can also be executed by the third controller. This can be achieved by either providing the cell DC voltages to the third controller or by processing the cell DC voltages with the second controllers and providing a processed value to the third controller that provides a DC measure using all processed values of the second controllers. This feature contributes to the modularity and scalability of the MMC as the second controllers provide a processed value that used all cell DC voltages to the higher-level third controller. The third controller then processes the values provided by the second controllers to get a DC measure over all converter arrangements and cells.

As already mentioned, the method comprises a using of the processed DC measure at each one of the at least two second controllers to control the at least two converter arrangements. The using can include a processing of the DC measure as an input at the second controllers as a reference value to balance the voltage of the respective converter arrangement. By using all cell DC voltages to process the DC measure it will be ensured that the voltage will be balanced across all converter arrangements and cells. By using the DC measure at the second controllers as an input or reference value, the method can be very easily implemented into existing balancing algorithms and MMCs. By that, the method ensures a voltage balancing across all converter arrangements regardless of how many converter arrangements and cells are used to form the MMC. In particular, this approach offers the unique benefit of being able to have a modular MMC without being bound to a fixed number of cells or converter arrangements.

The method of the present invention can also be seen as an adaptation of already known Individual Balancing Algorithms, specifically engineered to maintain stable and effective operation across a configured MMC. This method enables the flexibility of combining cells and converter arrangements from previously designed MMCs, ensuring that voltage balancing is meticulously managed and that the integrity of the power conversion process is upheld. This method addresses the inherent design restriction of a predetermined cell count. The present invention enables the dynamic combination of cells and converter arrangements from disparate MMC designs to construct an either more powerful, cohesive system or a smaller and compact system without compromising the voltage balancing.

In summary, a method for controlling a Modular Multilevel Converter (MMC) is provided that enables a modular approach in manufacturing so that an MMC with a configurable number of cells to be manufactured in a modular way without the need to change the method for controlling the MMC.

According to a preferred embodiment of the method, step a) comprises measuring a DC voltage of each one of the plurality of converter cells to provide the respective cell DC voltages. Measuring the DC voltage of each one of the plurality of cells can lead to more precise results in comparison to estimating the DC voltage of each one of the plurality of cells. As already mentioned, the DC voltage of each of the plurality of cells needs to be measured nonetheless for balancing the voltage across the MMC. Therefore, the method of the present invention can be implemented very easily by changing existing balancing algorithm developed for existing MMCs and used for a new modular MMC design.

According to a preferred embodiment of the method, step b) comprises averaging the respective DC cell voltages of each one of the at least two converter arrangements to provide the DC measure. Averaging the DC cell voltages can yield to the stability of the entire converter arrangement including the cells. The averaged DC cell voltages can then be used for balancing the voltages across the MMC to ensure an evenly distributed voltage balancing and a stable power output of the MMC. The averaging is preferably done by the third controller. Therefore, each cell, preferably the first controller, sends its DC voltage value to the third controller. The third controller gathers all cell DC voltages and averages the cell DC voltages to provide the DC measure. The DC measure can then be used for further processing or directly to balance the voltage. This serves to ensure a uniform stress distribution and a lower THD in the output waveform.

According to a preferred embodiment of the method, step b) comprises averaging the respective DC cell voltages of each one of the at least two converter arrangements to provide an average DC converter arrangement voltage of every converter arrangement. Averaging the DC cell voltages can yield to the voltage balancing of the entire converter arrangement including the cells. By providing an average DC converter arrangement voltage of every converter arrangement each second controller averages the cell DC voltages of its associated cells and provides an average DC converter arrangement voltage. The average DC converter arrangement voltages can then be used for further processing and for balancing the voltages across the converter arrangements of the MMC. This step contributes to a modular approach of designing and providing modular MMCs with a dynamic number of cells or converter arrangements without the need of changing the voltage balancing algorithm.

According to a preferred embodiment of the method, step b) further comprises sending the respective average DC converter arrangement voltage of every converter arrangement to the third controller. The third controller coordinates the actions of all the second controllers within the MMC, ensuring that they work together to produce the desired output voltage and current waveforms according to the system's requirements. Therefore, sending the average DC converter arrangement voltages of every converter arrangement to the third controller adds to the modular approach as the third controller can gather all average DC converter arrangement voltages regardless of the number of converter arrangements used in the MMC.

According to a preferred embodiment of the method, step b) further comprises averaging the respective average DC converter arrangement voltage of every converter arrangement to provide a DC voltage reference value as the DC measure. The averaging of the respective average DC converter arrangement voltages is preferably done by the third controller. The third controller gets all respective DC converter arrangement voltages from the second controller and averages them to provide the DC measure that can be used to control the converter arrangements. This aspect facilitates to the fact that a modular MMC can be designed that can be controlled very easily with the method of the present invention without being tied to the specific topology and number of cells and converter arrangements.

According to a preferred embodiment of the method, step b) further comprises sending the DC measure to each one of the at least two second controllers. As already described, the DC measure is an average of all DC converter arrangement voltages itself being an average of all DC cell voltages. By sending the DC measure to the second controllers, the DC measure, which is an average of all DC cell voltages and DC converter arrangement voltages, it can be used to balance the voltage across all cells and converter arrangements that were used for calculating the DC measure. By this approach the method offers the advantage that it can balance the voltage of a variety of MMCs regardless of the number of cells or converter arrangements. Therefore, the present invention enables to design and manufacture modular MMCs by using modular converter arrangements added together as needed to meet the power and voltage requirements for the MMC.

According to a preferred embodiment of the method, step c) comprises controlling the converter cells according to the DC measure. The DC measure will be used at the second controllers to control the cells according to the DC measure. Therefore, the DC measure can be used as an input or reference voltage value for the cells. Each second controller get the DC measure as a reference voltage value that the controllers can use to balance the voltage of the cells to achieve the target voltage value. This mechanism promotes a modular approach of designing and manufacturing an MMC. It contributes to the fact that an existing design of a converter arrangement of an MMC can be reused, and the computing tasks can be split as every second controller uses the DC measure as a reference value without the need of knowing its average DC voltage for the voltage balancing.

According to a preferred embodiment of the method, the MMC generates an output voltage waveform using a modulation technique, wherein step b) of the method comprises calculating an initial phase of a carrier signal for every one of the at least two converter arrangements. Shifting the initial phase in the modulation strategy of an MMC for voltage balancing involves strategically adjusting the phase angles of the carrier waveforms for different converter arrangements or cells. This technique can enhance the voltage balancing across the converter. By phase-shifting the carrier waveforms, the switching events of the cells in different converter arrangements are spread out over the modulation cycle. This can lead to a more continuous and smoother voltage contribution from each converter arrangement, enhancing the overall voltage balance.

According to a preferred embodiment of the method, the initial phase is calculated by using an initial phase of a previous calculation, a number of cells of a previous calculation and a number of total cells of the MMC. Calculating the initial phase shift for an MMC by using a previous calculation, a number of cells of a previous calculation and a number of total cells of the MMC, as a reference has several advantages, particularly in the context of dynamically adjusting the system for optimal performance. Consistent phase shift adjustments over time, informed by previous calculations, can lead to more effective harmonic cancellation and power quality improvement.

According to a preferred embodiment of the method, the calculated initial phase of the carrier signal is calculated by the following equation:

$$\delta_{init} = \delta_{init_{prev}} + 180 \, \frac{N_{cell_{Chain_{prev}}}}{N_{cell_{TOT}}},$$

wherein $\delta_{init_{prev}}$ represents the initial phase shift of a previous calculation, $N_{cell_{Chain_{prev}}}$ represents the number of converter cells of a converter arrangement of the previous calculation and $N_{cell_{TOT}}$ represents the total amount of converter cells of the MMC. This calculation defines each initial phase of the carrier signal for every converter arrangement leading into the desired THDv.

According to a second aspect of the present invention, the problem outlined in the introduction is solved by a converter subgroup of a Modular Multilevel Converter (MMC) according to claim 12. Therefore, a converter subgroup of a Modular Multilevel Converter (MMC) is provided, configured for carrying out a method according to the first aspect of the present invention.

According to a third aspect of the present invention, the problem outlined in the introduction is solved by a Modular Multilevel Converter (MMC) according to claim 13. Therefore, a Modular Multilevel Converter (MMC) is provided that comprises a plurality of converter subgroups, each converter subgroup comprises a plurality of converter cells, each converter cell comprises a first controller, and at least one converter arrangement comprising a second controller, wherein the converter arrangement includes at least two of the plurality of converter cells. The MMC further comprises a third controller controlling the at least two converter arrangements by being in communication with each second controller.

With the MMC it is possible to provide a modular approach of building and designing an MMC. The MMC uses a converter subgroup which comprise a plurality of converter cells and at least one converter arrangements. Therefore, it is possible to manufacture a converter subgroup and to use the subgroup in an MMC, wherein the MMC comprises a third controller that is in communication with each second controller. The third controller can be used to control the second controller and therefore to control the converter arrangements to ensure that the voltages across all converter arrangements will be balanced. With this approach it is possible to manufacture an MMC with a higher or lower number of cells by adding or removing converter subgroups leading into an increased or decreased number of cells for the MMC. The subgroups comprise the second controller that communicate with the third controller to balance the voltage across all converter arrangements.

According to a preferred embodiment of the MMC, the MMC is configured for carrying out a method according to the first aspect of the present invention. In this embodiment the subgroups comprising the second controllers will average the DC cell voltages of the respective converter arrangements and send the average DC converter arrangement voltage to the third controller. The third controller averages the DC converter arrangement voltages of all converter arrangements providing the DC measure to every second controller, which uses the DC measure as a reference value to balance the voltage. With this approach an MMC is provided that can very easily be scaled by adding more modules to the system.

Further features, advantages and application possibilities of the present invention may be derived from the following description of exemplary embodiments and/or the figures. Thereby, all described and/or visually depicted features for themselves and/or in any combination may form an advantageous subject matter and/or features of the present invention independent of the combination in the individual claims or the dependencies. Furthermore, in the figures, same reference signs may indicate same or similar objects.

Figs. 1 and 2 schematically illustrate an embodiment of a Modular Multilevel Converter (MMC) according to the third aspect of the present invention.

Fig. 3 schematically illustrates a flow chart of an embodiment of a method according to the first aspect of the present invention.

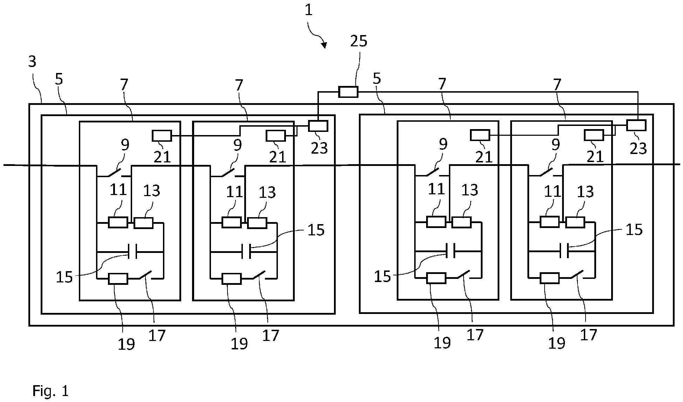

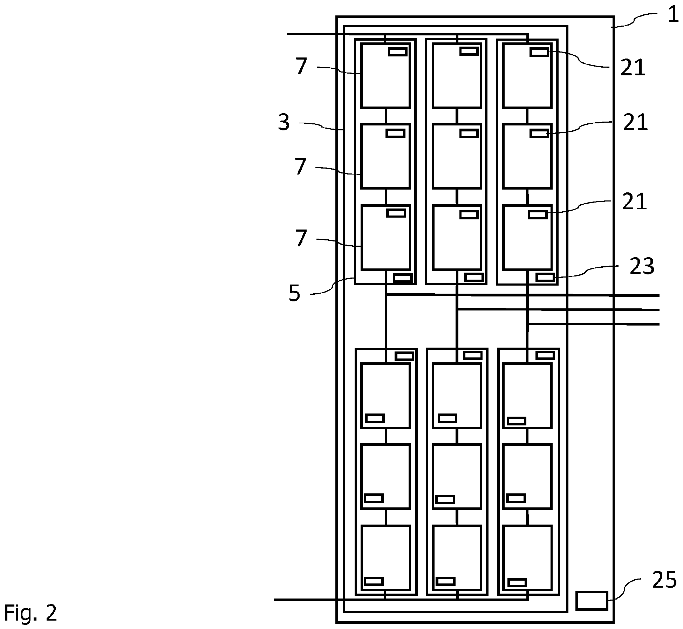

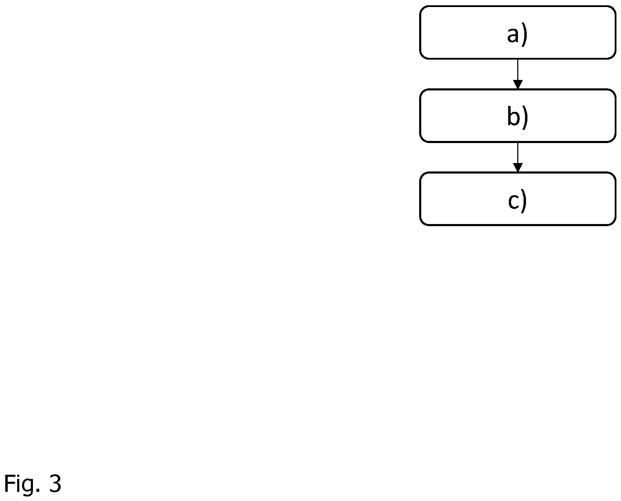

Fig. 1 and 2 schematically illustrate an embodiment of a Modular Multilevel Converter (MMC) 1 according to the third aspect of the present invention. The MMC 1 comprises a converter subgroup 3 comprising two converter arrangements 5. Each converter arrangement 5 comprises at least two converter cells 7. In an alternative embodiment the converter subgroup 3 can comprise more than two converter arrangements 5 and/or the converter arrangements 5 can comprise more than two cells 7. The MMC 1 is defined by its modular approach that will be described in the following. The converter subgroup 3 of the MMC 1 can be controlled by a method according to the first aspect of the invention, which will be described later with reference to Fig. 3. The modular approach of the MMC 1 enables to connect more converter arrangements 5 and/or more converter subgroups 3 to the MMC 1 without the need of changing the method for controlling the MMC 1 or the converter subgroups 3.

In the illustrated exemplary embodiment, the cells 7 comprise a main switch 9 that serves as the switch for the cell 7 and controls the connection of the components of the cell 7 to the rest of the converter subgroup 3 and the MMC 1. Each cell 7 further comprises a first transistor 11, a second transistor 13, a capacitor 15, a discharge switch 17, and a discharge resistor 19. In this embodiment the cells 7 of the converter subgroups 3 comprise a half-bridge topology. In an alternative embodiment the cells 7 can comprise a full-bridge topology. It is also possible that the cells 7 can compromise a mirror cell topology or any power electronic arrangement.

The capacitor 15, maintains a DC voltage of the cell 7, namely a cell DC voltage. The cell DC voltage is a critical parameter for the correct operation of the converter subgroup 3. The total DC voltage of the converter subgroup 3 is divided among the cells 7. The rated power and voltage levels of the application influences the necessary voltage of each cell 7. The cells 7 are used to reach a total required DC voltage, wherein the total required DC voltage can be divided by all converter cells 7. This means that the more cells 7 in series the converter subgroup 3 has, the lower the voltage each cell 7 needs to maintain.

The first transistor 11 and the second transistor 13 are controlling the flow of power through the cell 7. The first and second transistors 11, 13 can be switched in a pattern that ensures that the voltage across the capacitors 15 in the converter subgroup 3 and the MMC 1 is balanced. This switching pattern is typically controlled using a balancing algorithm. The first and second transistors 11, 13 can be any type of switches such as for example transistors, IGBTs, thyristors or MOSFETs.

A discharge switch 17 is used to connect a discharge resistor 19 to the capacitor 15 to slowly discharge the capacitor 15 when the converter subgroup 3 is turned off for safety reasons, ensuring that no high voltage remains stored in the capacitors when the converter subgroup 3 is not in operation.

Each converter cell 7 is being controlled by a first controller 21. The first controllers 21 manage the operation of each cell 7 within the converter subgroup 3. The first controllers 21 can control its electrical components, like the transistors 11, 13 to regulate the voltage of each individual converter cell 7. Thus, additional cells 7 can be added or removed as needed, and the MMC 1 can be easily reconfigured to meet changing demands.

The converter subgroup 3 comprises at least two converter arrangements 5, each converter arrangement 5 being controlled by a second controller 23, wherein each converter arrangement 5 includes two or more - and preferably and in most cases considerably more than two - of the plurality of converter cells 7. A converter arrangement 5 is therefore responsible for managing a group of cells 7. The second controller 23 synchronizes and controls the operation of the cells 7 within its converter arrangement 5. It ensures that the cells 7 switch on and off in a coordinated manner, according to the control strategy implemented for the entire converter subgroup 3. One of the primary functions of the second controller 23 is to maintain the voltage balance across the cells 7 it governs. It does this by managing the individual cell 7 charging and discharging, thus ensuring that the voltage of each cell 7 remains within the desired range and contributes correctly to the overall voltage waveform. The second controller 23 collects and processes data from its cells 7, such as voltage, current, temperature, and state of charge. This data can be used for real-time monitoring, diagnostics, and predictive maintenance. The second controller 23 acts as an intermediary between the cells 7 and the third controller 25 of the MMC 1. They communicate the status and needs of the converter arrangement 5 to the third controller 25, which then makes decisions based on the aggregated information from all converter subgroups 5.

The third controller 25 of the MMC 1 is designed to manage and control the second controller 23 and therefore the entire MMC 1. The third controller 25 coordinates the actions of all the second controllers 23 within the MMC 1, ensuring that they work together to produce the desired output voltage and current waveforms according to the system's requirements. It implements the overall control strategy for the MMC 1.

Fig. 2 schematically illustrates an embodiment of a Modular Multilevel Converter (MMC) 1 according to the third aspect of the present invention. The MMC 1 comprises six converter arrangements 5, wherein each converter arrangement 5 comprises three cells 7. In the illustrated embodiment two of the six converter arrangements 5 can be seen as one leg of the MMC 1, where one leg corresponds to one phase of the AC output in a three-phase system. In an alternative embodiment each converter arrangement 5 can comprise all cells 7 of one leg of the MMC 1.

Fig. 3 schematically illustrates a flow chart of an embodiment of a method according to the first aspect of the present invention. The method is for controlling a Modular Multilevel Converter (MMC) 1. The method comprises a step a) that comprises determining a DC voltage of each one of the plurality of converter cells 7 to provide respective cell DC voltages, a step b) that comprises processing the respective cell DC voltages of each one of the at least two converter arrangements 5 to provide a DC measure, and a step c) that comprises using the processed DC measure at each one of the at least two second controllers 25 to control the at least two converter arrangements 5.

Step a) comprises measuring a DC voltage of each one of the plurality of converter cells 7 to provide the respective cell DC voltages. Measuring the DC voltage of each one of the plurality of cells 7 leads to more precise results. As already mentioned, the DC voltage of each of the plurality of cells 7 needs to be measured nonetheless for balancing the voltage across the MMC 1 or the converter subgroup 3. Therefore, the method of the present invention can be implemented very easily by changing existing balancing algorithm developed for existing converter subgroups 3 and used for a new modular MMC 1.

The cell DC voltage of each one of the plurality of cells 7 will be determined by the first controllers 21. The determination can also include to provide the DC voltage of each cell 7 to the second controller 23. This adds to the benefit that the first controllers 21 provide localized control, which allows for more precise voltage regulation at the cell 7 level. This helps in addressing cell-specific issues that might not be apparent at a higher system level. Additionally, this also makes the converter subgroup 3, in particular the design and setup of a converter arrangement 5, more modular, leading into a modular approach with increased scalability.

The method comprises a processing of the respective cell DC voltages of each one of the at least two converter arrangements 5 to provide a DC measure in step b). In a first embodiment of the present invention the respective DC cell voltages of each one of the cells 7 of the two converter arrangements 5 will be averaged by the second controllers 23 to obtain an average DC converter arrangement voltage. The second controllers 23 then send the average DC converter arrangement voltage of each converter arrangement 5 to the third controller 25. The third controller 25 then averages all DC converter arrangement voltages to obtain the DC measure.

As already mentioned, the method comprises a using of the processed DC measure at each one of the at least two second controllers 23 to control the at least two converter arrangements 5. The using can include a processing of the DC measure as an input at the second controllers 23 as a reference value to balance the voltage of the respective converter arrangement 5. Each second controller 23 gets the DC measure as a reference voltage value that the second controllers 23 can use to balance the voltage of the cells 7 to achieve the target voltage value.

By using all cell DC voltages to process the DC measure it will be ensured that the voltage will be balanced across all converter arrangements 5 and cells 7. By using the DC measure at the second controllers 23 as an input or reference value, the method can be very easily implemented into existing balancing algorithms and converter subgroups 3. By that, the method ensures a voltage balancing across all converter arrangements 5 regardless of how many converter arrangements 5 and cells 7 are used to form the converter subgroup 3 or the MMC 1. In particular, this approach offers the unique benefit of being able to have a modular converter subgroup 3 without being bound to a fixed number of cells 7 or converter arrangements 5.

In a second embodiment of the present invention the processing of the DC measure includes calculating an initial phase of a carrier signal for every one of the at least two converter arrangements 5. Shifting the initial phase in the modulation strategy of a converter subgroup 3 for voltage balancing involves strategically adjusting the phase angles of the carrier waveforms for different converter arrangements 5 or cells 7. This technique can enhance the voltage balancing across the converter subgroup 3. By phase-shifting the carrier waveforms, the switching events of the cells 7 in different converter arrangements 5 are spread out over the modulation cycle. This leads to a more continuous and smoother voltage contribution from each converter arrangement 5, enhancing the overall voltage balance.

The method of the present invention can also be seen as an adaptation of already known Individual Balancing Algorithms or modulation techniques, specifically engineered to maintain stable and effective operation across a configured converter subgroup 3. This method enables the flexibility of combining cells 7 and converter arrangements 5 from previously designed converter subgroups 3, ensuring that voltage balancing is meticulously managed and that the integrity of the power conversion process is upheld. This method addresses the inherent design restriction of a predetermined cell 7 count. The present invention enables the dynamic combination of cells 7 and converter arrangements 5 from disparate converter subgroup 3 designs to construct an either more powerful, cohesive MMC 1 or a smaller and compact MMC 1 without compromising the voltage balancing. By employing well-known algorithms that manage voltage regulation and synchronization across multiple cells 7, the present invention presents a transformative way to scale power conversion capabilities to meet a broader range of operational demands. This paves the way for enhanced flexibility and efficiency in power systems, representing a significant improvement from conventional methods for controlling a converter subgroup 3.

Reference signs

| | |
|---|---|
| 1 | Modular Multilevel Converter |
| 3 | converter subgroup |
| 5 | converter arrangement |
| 7 | cell |
| 9 | main switch |
| 11 | first transistor |
| 13 | second transistor |
| 15 | capacitor |
| 17 | discharge switch |
| 19 | discharge resistor |
| 21 | first controller |
| 23 | second controller |
| 25 | third controller |

**Claims**

1. A method for controlling a converter subgroup (3), wherein the converter subgroup (3) comprises:

   a plurality of converter cells (7), each converter cell (7) being controlled by a first controller (21), at least two converter arrangements (5), each converter arrangement (5) being controlled by a second controller (23), wherein each converter arrangement (5) includes at least two of the plurality of converter cells (7), a third controller (25) controlling the at least two converter arrangements (5) by being in communication with each second controller (23), the method comprising the steps of:

   a) determining a DC voltage of each one of the plurality of converter cells (7) to provide respective cell DC voltages;
   b) processing the respective cell DC voltages of each one of the at least two converter arrangements (5) to provide a DC measure;
   c) using the processed DC measure at each one of the at least two second controllers

   (23) to control the at least two converter arrangements (5).

2. The method of claim 1, wherein step a) comprises:
   measuring a DC voltage of each one of the plurality of converter cells (7) to provide the respective cell DC voltages.

3. The method of claim 1 or 2, wherein step b) comprises:
   averaging the respective DC cell voltages of each one of the at least two converter arrangements (5) to provide the DC measure.

4. The method of claim 1 or 2, wherein the step b) comprises:
   averaging the respective DC cell voltages of each one of the at least two converter arrangements (5) to provide an average DC converter arrangement voltage of every converter arrangement (5).

5. The method of claim 4, wherein step b) further comprises:
   sending the respective average DC converter arrangement voltage of every converter arrangement (5) to the third controller (25).

6. The method of claim 5, wherein step b) further comprises:
   averaging the respective average DC converter arrangement voltage of every converter arrangement (5) to provide a DC voltage reference value as the DC measure.

7. The method of any one of the preceding claims, wherein step b) further comprises:
   sending the DC measure to each one of the at least two second controllers (23).

8. The method of any one of the preceding claims, wherein step c) comprises:
   controlling the converter cells (7) according to the DC measure.

9. The method of any one of the preceding claims, wherein the converter subgroup (3) generates an output voltage waveform using a modulation technique, step b) of the method comprises:
   calculating an initial phase of a carrier signal for every one of the at least two converter arrangements (5).

10. The method of claim 9, wherein the initial phase is calculated by using an initial phase of a previous calculation, a number of cells (7) of a previous calculation and a number of total cells (7) of the converter subgroup (3).

**11.** The method of claim 9 or 10, wherein the calculated initial phase of the carrier signal is calculated by the following equation:

$$\delta_{init} = \delta_{init_{prev}} + 180 \, \frac{N_{cell_{Chain_{prev}}}}{N_{cell_{TOT}}},$$

wherein $\delta_{init_{prev}}$ represents the initial phase shift of a previous calculation, $N_{cell_{Chain_{prev}}}$ represents the number of converter cells (7) of a converter arrangement (5) of the previous calculation, and $N_{cell_{TOT}}$ represents the total amount of converter cells (7) of the converter subgroup (3).

**12.** A converter subgroup (3) for a Modular Multilevel Converter (MMC) (1) configured for carrying out a method of any one of the preceding claims.

**13.** A Modular Multilevel Converter (MMC) (1) comprising:

a plurality of converter subgroups (3), each converter subgroup (3) comprising:

a plurality of converter cells (7), each converter cell (7) comprising a first controller (21), and
at least one converter arrangement (5) comprising a second controller (23), wherein the converter arrangement (5) includes at least two of the plurality of converter cells (7),

a third controller (25) controlling the at least two converter arrangements (5) by being in communication with each second controller (23).

**14.** The Modular Multilevel Converter (MMC) (1) of claim 13 wherein the MMC (1) is configured to carry out a method according to claims 1 to 11.

Fig. 1

Fig. 2

a)

b)

c)

Fig. 3

# EP 4 765 617 A1

EUROPEAN SEARCH REPORT

Application Number

EP 24 22 1782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 280 952 A (UNIV ZHEJIANG) 4 September 2013 (2013-09-04) | 1-10, 12-14 | INV. H02M7/483 |
| A | * abstract; figure 1 * | 11 | H02M7/49 |
| X | CN 105 915 076 B (UNIV SOUTHEAST) 19 March 2019 (2019-03-19) * abstract; figures 1-4 * | 1-10, 12-14 | |
| X | CN 202 076 951 U (UNIV SHANDONG) 14 December 2011 (2011-12-14) * abstract; figures 1-5 * | 1-10, 12-14 | |
| X | CN 103 684 014 B (ZHEJIANG ELECTRIC POWER DESIGN INST) 27 January 2016 (2016-01-27) * abstract; figures 2,4 * | 1-10, 12-14 | |

TECHNICAL FIELDS SEARCHED (IPC)

H02M

The present search report has been drawn up for all claims

| Place of search | Date of completion of the search | Examiner |
|---|---|---|
| The Hague | 20 May 2025 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 1782

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2025

| Patent document cited in search report | | Publication date | Patent family member(s) | Publication date |
|---|---|---|---|---|
| CN 103280952 | A | 04-09-2013 | NONE | |
| CN 105915076 | B | 19-03-2019 | NONE | |
| CN 202076951 | U | 14-12-2011 | NONE | |
| CN 103684014 | B | 27-01-2016 | NONE | |

For more details about this annex : see Official Journal of the European Patent Office, No. 12/82